# EUROPÄISCHE PATENTANMELDUNG

(11) **EP 1 459 875 A2**
(43) Veröffentlichungstag der Anmeldung: **22.09.2004**
(21) Anmeldenummer: 04090110.0
(22) Anmeldetag: 17.03.2004
(51) Int. Cl.: B30B 11/08, B30B 11/00, G05B 19/042

(54) **Sicherheits-Bus-System insbesondere für Tablettiermaschinen**

(30) Priorität: 21.03.2003 DE 20304950 U
(71) Anmelder: Korsch AG, 13509 Berlin (DE)
(72) Erfinder: Walter Hegel, 13437 Berlin (DE)
(74) Vertreter: Schneider, Henry, Dipl.-Ing.

(57) **Zusammenfassung**

Die Erfindung betrifft ein Sicherheits-Bus-System (10) insbesondere für Tablettiermaschinen (12) mit wenigstens einem busfähigen Modul (14) und/oder wenigstens einem Bus-Controller (16) und wenigstens einer Bus-Leitung (18), wobei wenigstens eine Sicherheitsfunktion implementierbar ist und die wenigstens eine Sicherheitsfunktion und wenigstens eine Steuerungsfunktion und/oder wenigstens eine Messfunktion im Wesentlichen gleichzeitig ausführbar sind.

## Beschreibung

Die Erfindung betrifft ein Sicherheits-Bus-System insbesondere für Tablettiermaschinen mit den in dem Oberbegriff des Anspruches 1 genannten Merkmalen.

Bus-Systeme haben bekanntlich die Eigenschaft, dass Signale von Sensoren oder Aktuatoren nicht als Einzelsignale zur speicherprogrammierbaren Steuerung oder zur Erfassungsbeziehungsweise Steuereinheit verdrahtet werden müssen, sondern stattdessen an diversitären Komponenten angeschlossen werden, die wiederum untereinander mit einem meist als Zwei- oder Vierdrahtsystem ausgeführten Bus-System verbunden sind. Ein solches System ist beispielsweise aus der EP 1 050 400 A3 für die Anwendung in einer Rundläufer-Tablettenpresse bekannt.

Der Vorteil einer solchen Technologie ist, dass sich die Anzahl der erforderlichen Leitungen verringert und dadurch auch der Verdrahtungsaufwand sinkt. Durch die diversitäre Verteilung der Komponenten können außerdem kleinere Schaltschränke gewählt werden. Oftmals ist es auch das Ziel, komplett auf den Schaltschrank zu verzichten und die gesamte Steuerungs- und Regelungstechnik in den diversitären Baugruppen in der Maschine zu verteilen.

Nachteilig bei der Einführung von Sicherheitstechnik ist, dass sichere Funktionen, die beispielsweise dem Personenschutz dienen können, bisher kaum durch Software oder rein elektronische Systeme realisiert werden konnten, weil ein zuverlässiges Sicherheitskriterium an sie gestellt wurde, das nur durch hohen Aufwand, beispielsweise die Verwendung von redundanten Baugruppen und unterschiedlicher Software auf unterschiedlichen Zielsystemen, realisiert werden kann.

Nachteil der konventionellen Verdrahtung der Sicherheitssysteme ist ferner, dass immer zwei Systeme existieren - das elektronische Maschinensteuerungsprogramm, das den Ablauf und den Prozess beherrscht, und der Sicherheitsbereich, der aus sicherheitstechnischen Gründen konventionell aufgebaut ist. Zwischen beiden Systemen ist die Schaffung von Schnittstellen erforderlich, um die Informationen des einen Systems in das andere zu übertragen.

Weiterhin sind fest verdrahtete Systeme, die nicht über Software verfügen, starre Systeme. Dies ist ein Nachteil, weil heute in der Sicherheitstechnik flexible Sicherheitskonzepte gefragt sind, wobei die Maschine verschiedene Zustände annehmen kann, für die unter Umständen verschiedene unterschiedliche Sicherheitskonzepte anzuwenden sind. Dies ist bei einer fest verdrahteten Sicherheitstechnik entsprechend aufwendiger, weil möglicherweise mehr Baugruppen verwendet werden müssen, um diesen verschiedenen Aspekten gerecht zu werden.

Der Erfindung liegt daher die Aufgabe zugrunde, ein Sicherheits-Bus-System zu schaffen, welches sich durch eine höhere Wirtschaftlichkeit und eine geringere Störanfälligkeit als bisher bekannt auszeichnet.

Diese Aufgabe wird erfindungsgemäß durch ein Sicherheits-Bus-System mit den im Anspruch 1 genannten Merkmalen gelöst. Das erfindungsgemäße Sicherheits-Bus-System zeichnet sich dadurch aus, dass es aus wenigstens einem busfähigen Modul und/oder wenigstens einem Bus-Controller und wenigstens einer Bus-Leitung aufgebaut ist, wobei wenigstens eine Sicherheitsfunktion implementierbar ist und die wenigstens eine Sicherheitsfunktion und wenigstens eine Steuerungsfunktion und/oder wenigstens eine Messfunktion im Wesentlichen gleichzeitig ausführbar sind. Durch die Kombination von Standard- und Sicherheits-Bus wird der Vorteil einer heterogenen bedarfsorientierten Verdrahtung erzielt. Schnittstellen müssen nicht mehr geschaffen werden. Im Bereich der Sicherheit ist eine Einbettung und Erweiterung einer Vielzahl von Funktionen möglich, was die Realisierung flexibler Sicherheitskonzepte ermöglicht. Weiterhin führt die Minimierung der Leitungsanzahl zu Einsparungen und geringerer Störanfälligkeit sowie einer Reduktion der durch die Leitungslänge bei der Direktverdrahtung entstehenden Verluste. Auch eine Minimierung des erforderlichen Bauraumes für Verdrahtung und Schaltschrank wird durch die erfindungsgemäßen Mittel erzielt.

In einer bevorzugten Ausgestaltung der Erfindung ist vorgesehen, dass wenigstens ein analoges Signal mittels der wenigstens einen Sicherheitsfunktion und/oder der wenigstens einen Steuerungsfunktion und/oder der wenigstens einen Messfunktion verarbeitbar ist. Hierdurch wird ein besonders breiter und flexibler Einsatzbereich des Sicherheits-Bus-Systems erzielt.

Ferner ist in einer bevorzugten Ausgestaltung der Erfindung vorgesehen, dass wenigstens ein binäres Signal mittels der wenigstens einen Sicherheitsfunktion und/oder der wenigstens einen Steuerungsfunktion und/oder der wenigstens einen Messfunktion verarbeitbar ist. Auf diese Weise wird eine Implementierung einer Vielzahl von Funktionen unter Minimierung der erforderlichen Übertragungsbandbreite ermöglicht.

Weiterhin ist in einer bevorzugten Ausgestaltung der Erfindung vorgesehen, dass wenigstens eine der wenigstens einen Sicherheitsfunktion ein Sicherheitsfenster, ein Verkleidungsschalter, eine Not-Aus-Funktion oder dergleichen ist. Hierdurch ergeben sich besonders günstige Möglichkeiten der Realisierung, welche sich vorteilhaft durch vielfältige Anwendungsmöglichkeiten auszeichnen.

Überdies ist in einer bevorzugten Ausgestaltung der Erfindung vorgesehen, dass wenigstens eines des wenigstens einen busfähigen Moduls wenigstens einen Aktuator und/oder wenigstens einen Sensor und/oder wenigstens ein Anzeigemittel umfasst. Auf diese Weise sind vorteilhaft eine Vielzahl von Anwendungsmöglichkeiten realisierbar.

Darüber hinaus ist in einer bevorzugten Ausgestaltung der Erfindung vorgesehen, dass wenigstens eines des wenigstens einen busfähigen Moduls wenigstens ein sicherheitsrelevantes Befehlsgabemittel umfasst, und insbesondere bevorzugt, dass das wenigstens eine Befehlsgabemittel ein Schalter, Taster, Not-Aus-Schalter, Sensor oder dergleichen ist. Hierdurch wird vorteilhaft eine Implementierbarkeit einer Vielzahl möglicher Sicherheitsfunktionen erzielt.

Fernerhin ist in einer bevorzugten Ausgestaltung der Erfindung vorgesehen, dass wenigstens eines des wenigstens einen busfähigen Moduls wenigstens ein sicherheitsrelevantes Meldemittel umfasst, wobei mittels des wenigstens einen Meldemittels vorzugsweise wenigstens ein optisches und/oder wenigstens ein akustisches und/oder wenigstens ein mechanisches Signal erzeugbar ist. Auf diese Weise sind vorteilhaft eine Vielzahl möglicher Sicherheitsfunktionen realisierbar.

Weiterhin ist in einer bevorzugten Ausgestaltung der Erfindung vorgesehen, dass wenigstens eines des wenigstens einen busfähigen Moduls wenigstens einen sicherheitsrelevanten Aktuator umfasst, wobei der wenigstens eine sicherheitsrelevante Aktuator elektromechanisch, elektromagnetisch, piezoelektrisch, pneumatisch, hydraulisch oder dergleichen ist. Hierdurch wird vorteilhaft eine Realisierbarkeit einer Vielzahl möglicher Sicherheitsfunktionen erzielt.

Schließlich ist in einer bevorzugten Ausgestaltung der Erfindung vorgesehen, dass die wenigstens eine Bus-Leitung elektrisch, optisch funkgesteuert oder dergleichen ist, wobei die wenigstens eine Bus-Leitung vorzugsweise wenigstens eine Signalleitung umfasst, da diese Formen der Ausführung sich durch besonders günstige Übertragungseigenschaften auszeichnen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnung, die ein Sicherheits-Bus-System mit Not-Aus-Funktion für eine Tablettiermaschine zeigt, näher erläutert.

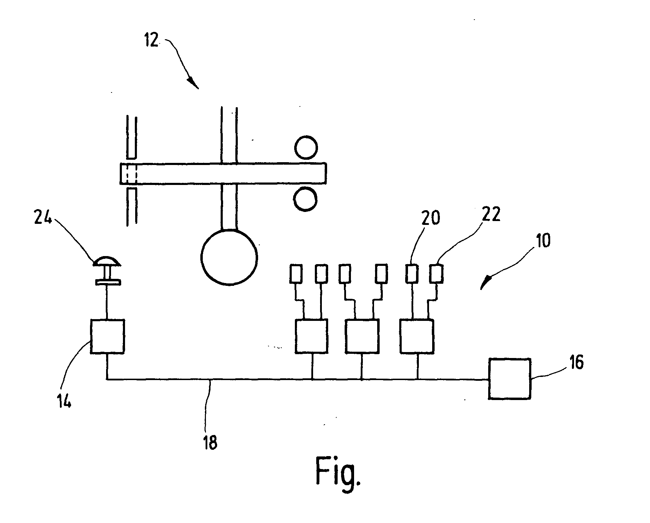

Die Figur zeigt ein erfindungsgemäßes Sicherheits-Bus-System 10 für den Einsatz in einer Tablettiermaschine 12 mit vier busfähigen Modulen 14, einer Bus-Leitung 18 und einem Bus-Controller 16 in Form eines Prozessrechners. In einer anderen Gestaltungsvariante kann neben dem Prozessrechner auch ein Sicherheitsmodul vorhanden sein, das die Kontakte aufweist, die die Sicherheitsfunktion realisieren. Drei der busfähigen Module 14 weisen Aktuatoren 20 und Sensoren 22 für die Steuerung der Tablettiermaschine 12 auf. Ein weiteres busfähiges Modul 14 umfasst ein sicherheitsrelevantes Befehlsgabemittel, welches in Form eines Not-Aus-Schalters 24 ausgebildet ist, zur Realisierung der Sicherheitsfunktion "Not-Aus". Die Bus-Leitung 18 ist als einadriger optischer Leiter ausgebildet. Eine weitere Variante ist die elektrische Ausführung, die mindestens zweiadrig ist. Die binären sowie analogen Mess- und Steuersignale der Aktuatoren 20 und Sensoren 22 werden über die Bus-Leitung 18 übertragen, während gleichzeitig der Status des Not-Aus-Schalters 24 abgefragt und über die Bus-Leitung 18 dem Bus-Controller 16 übermittelt wird. Bei einer Betätigung des Not-Aus-Schalters 24 wird dies von dem Bus-Controller 16 registriert, wobei unverzüglich reagiert und ein entsprechendes Sicherheitskonzept angewandt werden kann. Bei der Erfassung verschiedener Zustände der Tablettiermaschine 12 durch die Messung verschiedener Kombinationen unterschiedlicher Maschinencharakteristika mittels der Sensoren 22 ist beispielsweise im Fehlerfall jeweils ein zugeordnetes Sicherheitskonzept aufrufbar und anwendbar, was auf diesen speziellen Fehlerfall zugeschnitten ist. Durch die erfindungsgemäßen Mittel wird die Realisierung einer Vielzahl verschiedener flexibler Sicherheitskonzepte ermöglicht. Weiterhin führt die Minimierung der Leitungsanzahl auf eine Signalader zu Einsparungen und geringerer Störanfälligkeit sowie durch die optische Übertragung zu einer Eliminierung von Verlusten. Letztlich wird insbesondere eine Minimierung des erforderlichen Bauraumes für Verdrahtung und Schaltschrank erzielt.

### Bezugszeichenliste

- 10: Sicherheits-Bus-System
- 12: Tablettiermaschine
- 14: busfähiges Modul
- 16: Bus-Controller
- 18: Bus-Leitung
- 20: Aktuator
- 22: Sensor
- 24: Not-Aus-Schalter

## Patentansprüche

1. Sicherheits-Bus-System (10) insbesondere für Tablettiermaschinen (12) mit wenigstens einem busfähigen Modul (14) und/oder wenigstens einem Bus-Controller (16) und wenigstens einer Bus-Leitung (18), wobei wenigstens eine Sicherheitsfunktion implementierbar ist und die wenigstens eine Sicherheitsfunktion und wenigstens eine Steuerungsfunktion und/oder wenigstens eine Messfunktion im Wesentlichen gleichzeitig ausführbar sind.

2. Sicherheits-Bus-System (10) nach Anspruch 1, **dadurch gekennzeichnet, dass** wenigstens ein analoges Signal mittels der wenigstens einen Sicherheitsfunktion und/oder der wenigstens einen Steuerungsfunktion und/oder der wenigstens einen Messfunktion verarbeitbar ist.

3. Sicherheits-Bus-System (10) nach einem der Ansprüche 1 bis 2, **dadurch gekennzeichnet, dass** wenigstens ein binäres Signal mittels der wenigstens einen Sicherheitsfunktion und/oder der wenigstens einen Steuerungsfunktion und/oder der wenigstens einen Messfunktion verarbeitbar ist.

4. Sicherheits-Bus-System (10) nach einem der vorhergehenden Ansprüche, **dadurch gekennzeichnet, dass** wenigstens eine der wenigstens einen Sicherheitsfunktion ein Sicherheitsfenster, ein Verkleidungsschalter, eine Not-Aus-Funktion oder dergleichen ist.

5. Sicherheits-Bus-System (10) nach einem der vorhergehenden Ansprüche, **dadurch gekennzeichnet, dass** wenigstens eines des wenigstens einen busfähigen Moduls (14) wenigstens einen Aktuator (20) und/oder wenigstens einen Sensor (22) und/oder wenigstens ein Anzeigemittel umfasst.

6. Sicherheits-Bus-System (10) nach einem der vorhergehenden Ansprüche, **dadurch gekennzeichnet, dass** wenigstens eines des wenigstens einen busfähigen Moduls (14) wenigstens ein sicherheitsrelevantes Befehlsgabemittel umfasst.

7. Sicherheits-Bus-System (10) nach Anspruch 5, **dadurch gekennzeichnet, dass** das wenigstens eine Befehlsgabemittel ein Schalter, Taster, Not-Aus-Schalter (24), Sensor oder dergleichen ist.

8. Sicherheits-Bus-System (10) nach einem der vorhergehenden Ansprüche, **dadurch gekennzeichnet, dass** wenigstens eines des wenigstens einen busfähigen Moduls (14) wenigstens ein sicherheitsrelevantes Meldemittel umfasst.

9. Sicherheits-Bus-System (10) nach Anspruch 7, **dadurch gekennzeichnet, dass** mittels des wenigstens einen Meldemittels wenigstens ein optisches und/oder wenigstens ein akustisches und/oder wenigstens ein mechanisches Signal erzeugbar ist.

10. Sicherheits-Bus-System (10) nach einem der vorhergehenden Ansprüche, **dadurch gekennzeichnet, dass** wenigstens eines des wenigstens einen busfähigen Moduls (14) wenigstens einen sicherheitsrelevanten Aktuator umfasst.

11. Sicherheits-Bus-System (10) nach Anspruch 9, **dadurch gekennzeichnet, dass** der wenigstens eine sicherheitsrelevante Aktuator elektromechanisch, elektromagnetisch, piezoelektrisch, pneumatisch, hydraulisch oder dergleichen ist.

12. Sicherheits-Bus-System (10) nach einem der vorhergehenden Ansprüche, **dadurch gekennzeichnet, dass** die wenigstens eine Bus-Leitung (18) elektrisch, optisch, funkgesteuert oder dergleichen ist.

13. Sicherheits-Bus-System (10) nach einem der vorhergehenden Ansprüche, **dadurch gekennzeichnet, dass** die wenigstens eine Bus-Leitung (18) wenigstens eine Signalleitung umfasst.
